# FASCICULE DE BREVET EUROPEEN

(11) **EP 3 682 661 B1**
(45) Date de publication et mention de la délivrance du brevet: **14.08.2024**
(21) Numéro de dépôt: 18783547.5
(22) Date de dépôt: 13.09.2018
(51) Int. Cl.: H04W 12/02, H04W 12/06, H04L 9/40

(54) **ACCÈS À UN SERVICE AVEC AUTHENTIFICATION BASÉE SUR UN TERMINAL MOBILE**
ZUGRIFF AUF EINEN DIENST MIT AUTHENTIFIZIERUNG BASIEREND AUF EINEM MOBILEN ENDGERÄT
ACCESS TO A SERVICE WITH AUTHENTICATION BASED ON A MOBILE TERMINAL

(30) Priorité: 15.09.2017 FR 1758586; 28.11.2017 FR 1761293
(43) Date de publication de la demande: 22.07.2020
(73) Titulaire: Orange, 92130 Issy-les-Moulineaux (FR)
(72) Inventeur: DUMANOIS, Antoine, 92326 Châtillon Cedex (FR); MARAIS, Charles, 92326 Châtillon Cedex (FR); LUCAS, Philippe, 92326 Châtillon Cedex (FR); LEMOINE, Christine, 92326 Châtillon Cedex (FR); LLORENTE, Serge, 92326 Châtillon Cedex (FR)
(86) Numéro de dépôt international: PCT/FR2018/052240
(87) Numéro de publication internationale: WO 2019/053376

(56) Documents cités:
- FR-A1- 3 032 847
- US-A1- 2012 317 261
- US-A1- 2015 040 154
- V0 GSM ASSOCIATION ET AL: "Mobile Connect MNO Implementation Requirements Mobile Connect MNO Implementation Requirements Version 0.1 [Publication Date] Security Classification: Non-confidential GSM Association Non-confidential Official Document PDATA.10 -Mobile Connect MNO Implementation Requirements", 1 January 2016 (2016-01-01), Internet, pages 1 - 27, XP055370156, Retrieved from the Internet <URL:http://www.gsma.com/latinamerica/wp-content/uploads/2016/06/techdoc-MC-MNO_Implementation_Requirements-1.pdf> [retrieved on 20170508]

## Description

### 1. Domaine de l'invention

L'invention se situe dans le domaine de l'authentification d'un utilisateur souhaitant accéder à un service fourni via Internet, et plus particulièrement de l'authentification de cet utilisateur au moyen d'un terminal mobile.

### 2. Etat de la technique antérieure

Lorsqu'un utilisateur souhaite accéder, à l'aide d'un terminal de consultation quelconque, à un service fourni via Internet, ce service peut conditionner l'accès à une authentification de l'utilisateur avec un certain niveau de sécurité.

L'association d'acteurs de l'écosystème mobile GSMA a proposé, avec sa solution "Mobile Connect", une méthode d'authentification basée sur le terminal mobile de l'utilisateur, entre autre basée sur le module de sécurité, appelé carte SIM, dont est muni le terminal mobile.

Dans cette méthode, un serveur dit de découverte demande à l'utilisateur d'entrer sur son terminal de consultation le numéro de son téléphone mobile, c'est-à-dire son numéro MSISDN (Mobile Station International Subscriber Directory Number). Le serveur de découverte transmet alors un message au fournisseur de service lui permettant de déclencher une demande d'authentification du terminal mobile auprès de son opérateur. Si l'authentification est réussie, l'opérateur indique au fournisseur de service une information comme quoi l'authentification est réussie.

Lorsque le terminal mobile est aussi le terminal de consultation, il est souhaitable d'éviter de demander à l'utilisateur d'entrer son numéro MSISDN, afin d'améliorer le confort d'utilisation et la rapidité d'accès au service demandé. Mais les applications installées sur un téléphone mobile n'ont pas accès à son numéro MSISDN, ce qui rend impossible l'extraction et l'envoi de ce numéro au serveur de découverte sans une intervention de l'utilisateur.

De plus il est souhaitable que la méthode d'authentification ne dépende pas de données personnelles, stockées ou non dans le terminal mobile ou dans la carte SIM.

Un des buts de l'invention est de remédier à ces inconvénients de l'état de la technique.

### 3. Exposé de l'invention

L'invention vient améliorer la situation à l'aide d'un procédé d'accès à un service fourni sur un terminal mobile par un serveur contribuant à fournir le service, dit serveur applicatif, le procédé étant mis en oeuvre par le terminal mobile et comprenant les étapes suivantes:
- émission d'une requête comprenant un identifiant d'un souscripteur d'un abonnement auprès d'un opérateur mobile, dit identifiant du souscripteur, l'identifiant du souscripteur étant basé sur une information fournie par un module de sécurité du terminal mobile, et inséré dans la requête sans intervention de l'utilisateur;
- réception d'une réponse comprenant une information relative à l'identifiant du souscripteur, dite code d'identification;
- émission d'une requête d'authentification comprenant le code d'identification, la requête étant émise vers un serveur d'authentification de l'opérateur mobile;
- réception d'une réponse d'authentification comprenant une information relative au code d'identification, dite code d'authentification;
- émission d'une requête d'accès au service comprenant le code d'authentification, la requête étant émise vers le serveur applicatif.

Le module de sécurité d'un terminal mobile, aussi connu sous l'appellation de carte SIM, ne contient pas le numéro MSISDN du terminal mobile, mais il comprend des identifiants permettant à un opérateur d'identifier de manière unique le souscripteur d'un abonnement. La correspondance entre un tel identifiant de souscripteur, par exemple le numéro appelé numéro IMSI (International Mobile Subscriber Identity), et le numéro MSISDN est connue uniquement de l'opérateur mobile responsable de l'abonnement. Le numéro IMSI est composé d'une partie MCC (Mobile Country Code) permettant d'identifier le pays d'enregistrement de l'opérateur, d'une partie MNC (Mobile Network Code) permettant d'identifier l'opérateur lui-même, et d'une partie MSIN (Mobile Subscriber Identification Number), attribuée par l'opérateur, lui permettant d'identifier le souscripteur d'un abonnement. Un autre exemple d'identifiant extractible de la carte SIM et distinct du numéro MSISDN est le numéro appelé ICCID (integrated circuit card identifier).

Comme le numéro IMSI ou ICCID est mémorisé dans la carte SIM, il peut être automatiquement extrait et transmis dans le message en provenance du terminal, sans que l'utilisateur ait besoin de le connaitre, et sans son intervention, par exemple à l'aide d'une application intégrée au téléphone mobile ou à la carte SIM. Ainsi, grâce au procédé proposé, le terminal peut s'authentifier auprès de son opérateur sans que soit demandé à l'utilisateur le moindre numéro, MSISDN, IMSI, ICCID ou autre.

L'identifiant de souscripteur peut également être un numéro temporaire, par exemple le numéro TMSI (Temporary Mobile Subscriber Identity), un numéro aléatoire attribué par le réseau mobile lorsque le terminal s'y attache avec son numéro IMSI.

Le fait d'émettre deux requêtes permet à l'opérateur mobile de les traiter séparément, en respectant la séparation entre une phase dite de découverte (obtention d'un code d'authentification) et une phase dite d'autorisation (accession au service à l'aide du code d'authentification), minimise d'éventuelles modifications à l'architecture existante des systèmes d'authentification utilisés par les opérateurs mobiles.

Ainsi, ce n'est pas le code d'identification du terminal qui est communiqué par le terminal au serveur applicatif pour l'autoriser à fournir le service au terminal. A la place, un code d'authentification spécifique à la requête d'authentification est généré, comme résultat de l'authentification réussie du terminal, et c'est ce code d'authentification qui est communiqué par le terminal au serveur applicatif pour accéder au service.

Selon un aspect, le procédé d'accès à un service comprend en outre les étapes suivantes, suite à l'émission de la requête comprenant le code d'identification vers le serveur d'authentification :
- réception d'une requête de défi d'authentification en provenance du serveur d'authentification, requérant une action de la part de l'utilisateur du terminal mobile sur le terminal,
- émission d'une réponse de défi d'authentification vers le serveur d'authentification, suite à l'action effectuée sur le terminal par l'utilisateur.

Il est possible de conditionner l'accès au service par un terminal mobile à la réussite d'un défi d'authentification contrôlé par l'opérateur mobile du terminal, de façon totalement transparente pour l'utilisateur, mis à part le défi lui-même qui requiert une action de sa part. En effet, tout au long du procédé, y compris l'étape finale d'accès au service, l'utilisateur ne communique jamais un identifiant susceptible de permettre à une entité autre que l'opérateur, d'identifier le terminal. Cela d'une part procure à l'utilisateur une facilité accrue d'utilisation du service, et d'autre part augmente la sécurité des données personnelles de l'utilisateur, dont font partie son numéro de téléphone ou son identifiant de souscripteur.

Selon un aspect, le code d'identification est un identifiant généré sur la base d'un numéro de téléphone de type MSISDN associé au module de sécurité du terminal mobile, le numéro de téléphone étant dérivé sur la base de l'identifiant de souscripteur.

L'opérateur est le seul à pouvoir déduire le numéro MSISDN à partir de l'identifiant de souscripteur, et également le seul à pouvoir récupérer le numéro MSISDN à partir du code d'identification.

Selon un aspect, le code d'identification est à usage unique. Ainsi, le risque est réduit d'utilisation du code d'identification s'il a été intercepté par une entité autre que le terminal ou l'opérateur.

Selon un aspect, la validité du code d'identification est d'une durée limitée. Ainsi, le risque est réduit d'utilisation du code d'identification par une entité autre que le terminal ou l'opérateur.

Selon un aspect, le procédé d'accès à un service comprend en outre les étapes suivantes, préalablement à l'étape d'émission d'une requête d'authentification comprenant le code d'identification vers le second serveur:
- émission d'une requête de découverte vers le serveur applicatif;
- réception d'une réponse en provenance du serveur applicatif, comprenant au moins une adresse du second serveur.

Ainsi, si l'adresse du second serveur n'est pas connue du terminal, il peut l'obtenir à l'aide d'une requête vers le serveur applicatif. Le serveur applicatif connait l'adresse d'un serveur de découverte propre à l'opérateur, et peut obtenir ainsi l'adresse d'un serveur d'authentification adapté au type de service fourni par le serveur applicatif. C'est cette adresse de second serveur qui est donnée au terminal.

Selon un aspect, le code d'identification est une version chiffrée par l'opérateur d'un numéro de téléphone de type MSISDN attribué au module de sécurité du terminal mobile. Le chiffrage du numéro MSISDN est une solution simple permettant à l'opérateur mobile de communiquer une version de ce numéro à des entités tierces, tout en étant seul à pouvoir en déduire le numéro MSISDN original, lorsqu'il recevra ultérieurement la version chiffrée en provenance d'une de ces entités tierces.

Les différents aspects du procédé d'accès à un service qui viennent d'être décrits peuvent être mis en oeuvre indépendamment les uns des autres ou en combinaison les uns avec les autres.

L'invention concerne aussi un dispositif d'accès à un service sur un terminal mobile, compris dans le terminal mobile et comprenant:
- une interface multimédia pour la consommation du service par un utilisateur sur le terminal mobile,
- un module de sécurité,
- un émetteur apte à émettre une requête comprenant un identifiant d'un souscripteur d'un abonnement auprès d'un opérateur mobile, dit identifiant du souscripteur, l'identifiant du souscripteur étant compris dans la requête et basé sur une information fournie par le module de sécurité sans intervention de l'utilisateur;
- un récepteur apte à recevoir une réponse comprenant une information relative à l'identifiant du souscripteur, dite code d'identification;
- un émetteur apte à émettre une requête d'authentification comprenant le code d'identification, vers un serveur d'authentification de l'opérateur mobile;
- un récepteur apte à recevoir une réponse d'authentification comprenant une information relative au code d'identification, dite code d'authentification;
- un émetteur apte à émettre une requête d'accès au service comprenant le code d'authentification, vers un serveur applicatif contribuant à fournir le service destiné à être consommé à l'aide de l'interface multimédia.

Ce dispositif, apte à mettre en oeuvre dans tous ses modes de réalisation le procédé d'accès à un service qui vient d'être décrit, est destiné à être mis en oeuvre dans un terminal mobile.

L'invention concerne aussi un système comprenant un terminal mobile équipé d'un dispositif d'accès conforme à celui qui vient d'être décrit, un serveur applicatif apte à fournir un service destiné à être consommé par un utilisateur sur le terminal mobile, un serveur d'authentification d'un opérateur mobile apte à soumettre un défi d'authentification au terminal mobile sur la base d'une requête reçue de la part du terminal mobile, et un serveur de découverte apte à fournir une adresse du serveur d'authentification sur la base d'une requête du terminal mobile transmise par le serveur applicatif.

L'invention concerne aussi un programme d'ordinateur comprenant des instructions pour la mise en oeuvre des étapes du procédé d'accès à un service qui vient d'être décrit, lorsque ce programme est exécuté par un processeur.

L'invention vise aussi un support d'informations lisible par un terminal mobile, et comportant des instructions d'un programme d'ordinateur tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations mentionné ci-dessus peut être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, un support d'informations peut être un support transmissible tel qu'un signal électrique ou optique, qui peut être acheminé via un câble électrique ou optique, par radio ou par d'autres moyens. Le programme peut être en particulier téléchargé sur un réseau de type Internet.

Alternativement, le support d'informations peut être un circuit intégré dans lequel un programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple de mise en oeuvre d'un procédé d'accès à un service fourni sur un terminal mobile, selon une technique antérieure,
- la figure 2 présente un exemple de mise en oeuvre du procédé d'accès à un service fourni sur un terminal mobile, selon un premier mode de réalisation de l'invention,
- la figure 3 présente un exemple de mise en oeuvre du procédé d'accès à un service fourni sur un terminal mobile, selon un second mode de réalisation de l'invention,
- la figure 4 présente un exemple de structure du dispositif d'accès à un service fourni sur un terminal mobile, selon des aspects de l'invention.

### 5. Description détaillée d'au moins un mode de réalisation de l'invention

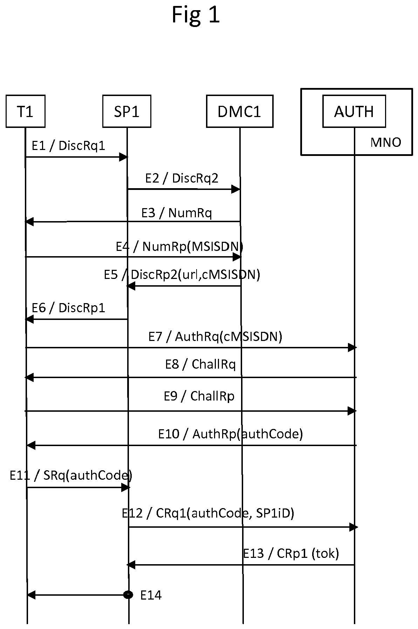

La **figure 1** présente un exemple de mise en oeuvre d'un procédé d'accès à un service fourni sur un terminal mobile, selon une technique antérieure.

Dans ce procédé, un utilisateur souhaite accéder sur son terminal mobile T1 à un service fourni par un serveur SP1 sur un réseau distant, par exemple l'Internet. Il utilise par exemple un navigateur ou une application dédiée sur son terminal T1, qui lui permet d'afficher, par exemple, un site web interactif, si le service est décliné sous la forme d'un site web, mais d'autres formats de livraison du service sur le terminal T1 sont envisageables.

La livraison du service est conditionnée à une authentification de l'utilisateur effectuée à l'aide du terminal, par exemple selon la méthode connue sous le nom de "Mobile Connect". Les étapes suivantes décrivent cette méthode.

Les étapes E1 à E5 font partie d'une phase de découverte préalable à l'authentification, et les étapes E6 à E9 font partie d'une phase d'authentification.

Lors d'une étape E1, le terminal T1 émet vers le serveur SP1 une requête DiscRq1 dite de requête de découverte, destinée à déclencher dans le serveur SP1 le recours à la méthode Mobile Connect pour authentifier l'utilisateur.

Lors d'une étape E2, le serveur SP1 émet vers un serveur dit serveur de découverte DMC1 une requête DiscRq2, aussi dite requête de découverte, destinée à déclencher dans le serveur DMC1 l'activation de la méthode Mobile Connect.

Lors d'une étape E3, le serveur DMC1 émet vers le terminal T1 une requête NumRq destinée à récupérer le numéro de téléphone mobile MSISDN du terminal T1.

Lors d'une étape E4, l'utilisateur entre sur son terminal T1 le numéro MSISDN du terminal, par exemple à la main sur l'écran tactile du terminal, et le terminal émet une réponse NumRp vers le serveur DMC1, comprenant le numéro MSISDN.

Au travers d'accords préalables entre l'entité gérant la plateforme Mobile Connect et des opérateurs mobiles, le serveur DMC1 est apte à faire le lien entre un numéro MSISDN et un de ces opérateurs mobiles. Par exemple, soit le serveur DMC1 possède en mémoire une table de correspondance entre numéros MSISDN et adresses de serveurs d'authentification d'opérateurs mobile, soit il interroge un serveur spécial.

Lors d'une étape E5, le serveur de découverte DMC1 émet vers le serveur applicatif SP1 une réponse DiscRp2, dite réponse de découverte, comprenant une adresse d'un serveur d'authentification propre à l'opérateur mobile MNO gérant l'abonnement associé au numéro MSISDN du terminal T1, par exemple une adresse url, ainsi qu'un paramètre cMSISDN, qui est une version chiffrée du numéro MSISDN, afin que le numéro MSISDN ne soit pas révélé au cours de son transport, en particulier au fournisseur de service gérant le serveur applicatif SP1. Le serveur DMC1 utilise pour chiffrer le numéro MSISDN un moyen de chiffrement connu de l'opérateur mobile MNO, par exemple à l'aide d'une clé publique préalablement fournie par l'opérateur mobile MNO.

Lors d'une étape E6, le serveur de découverte DMC1 transmet vers le terminal T1, la réponse DiscRp1, qui comprend le même contenu que la réponse DiscRp2.

Les messages DiscRq1, DiscRq2, NumRq, NumRp, DiscRp2 et DiscRp1 peuvent faire partie de la même session applicative, par exemple une session http, ou faire partie d'une même chaine de requête/réponse http, mémorisée par le serveur SP1.

Lors d'une étape E7, à l'aide de l'adresse obtenue lors de l'étape E6, le terminal T1 émet vers le serveur d'authentification AUTH de l'opérateur mobile MNO une requête AuthRq, dite requête d'authentification, comprenant la version chiffrée du numéro MSISDN. Comme il fait partie du domaine de l'opérateur MNO, qui a chiffré le numéro MSISDN, le serveur AUTH possède le moyen de déchiffrement, par exemple la clé privée correspondant à la clé publique mentionnée plus haut, et récupère le numéro MSISDN en clair.

Lors d'une étape E8, le serveur AUTH émet vers le terminal T1 une requête ChallRq, dite requête de défi, dont le but est de demander à l'utilisateur du terminal T1 une preuve de son droit ou de son consentement à utiliser le service demandé. Cette requête et sa réponse sont par exemple des messages du type SMS.

Lors d'une étape E9, l'utilisateur du terminal T1 répond au défi. Par exemple, selon le choix fait par le fournisseur de service ou l'opérateur mobile MNO vis-à-vis de la méthode Mobile Connect, dans le cas d'une authentification forte, il peut être demandé à l'utilisateur d'entrer un code personnel, spécifique à Mobile Connect, par exemple une suite de caractères alphanumériques. Dans le cas d'une authentification faible, il peut simplement être demandé à l'utilisateur de confirmer la réception de la requête ChallRq sur le terminal T1. L'action de l'utilisateur est par exemple vérifiée par la carte SIM qui la certifie si elle est correcte. Suite à l'action de l'utilisateur, une réponse ChallRp, dite réponse au défi, est émise par le terminal T1 vers le serveur d'authentification AUTH. Cette réponse ne contient pas le code entré par l'utilisateur, mais contient la certification faite par la carte SIM de la conformité de l'action de l'utilisateur. Le serveur AUTH vérifie la certification et éventuellement le fait qu'il ait reçu la réponse ChalIRp dans un temps déterminé.

En résultat attendu du défi, le serveur d'authentification AUTH obtient à la fois l'authentification du terminal T1, et le consentement de l'utilisateur du terminal T1 pour l'utilisation qui sera faite de l'authentification, c'est-à-dire la fourniture d'un service au terminal T1 par le serveur SP1.

Si cette vérification par le serveur AUTH est positive, le serveur AUTH, lors d'une étape E10, émet vers le terminal T1 une réponse AuthRp, dite réponse d'authentification, en réponse à la requête AuthRq émise lors de l'étape E7, comprenant un code d'authentification authCode. Ce code d'authentification n'est pas suffisant au terminal T1 pour obtenir le service demandé au serveur SP1, mais si le terminal T1 le transmet au serveur SP1, il permet au serveur SP1 d'obtenir de la part du serveur d'authentification AUTH une preuve du droit du terminal T1 à obtenir le service ainsi qu'une identification du client derrière l'utilisateur du terminal T1. Par sécurité, cette preuve n'est pas confiée au terminal T1 de façon directe par le serveur AUTH.

Les messages d'authentification AuthRq et AuthRp sont liés aux messages de découverte DiscRq1, DiscRq2, NumRq, NumRp, DiscRp2 et DiscRp1, soit par l'appartenance à une même session http, soit par un chainage des messages entre eux mémorisé par le terminal T1. S'il a plusieurs sessions applicatives en cours, le terminal T1 sait donc exactement à quelle session applicative correspond la réponse d'authentification reçue lors de l'étape E10.

Lors d'une étape E11, le terminal T1 émet vers le serveur SP1 une requête de service SRq, qui peut être un transfert de la réponse AuthRp, comprenant le code d'authentification authCode.

Lors d'une étape E12, le serveur SP1 vérifie le droit du terminal T1 à obtenir le service en émettant vers le serveur AUTH une requête CRq1 comprenant le code d'authentification authCode ainsi qu'un identifiant SP1iD du serveur SP1, connu de l'opérateur MNO. L'identifiant SP1iD peut comprendre une partie identifiant proprement dite, et une partie mot de passe spécifique au serveur SP1, afin de permettre au serveur AUTH d'identifier le serveur SP1 avec un certain niveau de sécurité. Le serveur SP1 a obtenu l'adresse @auth du serveur AUTH par exemple à l'aide de la réponse DiscRp2 lors de l'étape E5.

Lors d'une étape E13, le serveur AUTH récupère le code d'authentification authCode et l'identifiant SP1iD, vérifie l'identité du serveur SP1. Si le code d'authentification authCode et l'identifiant SP1iD sont corrects, le serveur AUTH fournit un jeton tok qui est la preuve du droit du terminal T1 à obtenir le service, preuve qui est pérenne et unique à l'utilisateur du terminal T1 pour le service fourni par le serveur SP1, et émet vers le serveur SP1 une réponse CRp1 comprenant le jeton tok.

Lors d'une étape E14 déclenchée grâce au jeton tok reçu lors de l'étape E13, le serveur SP1 commence la livraison du service au terminal T1, avec les caractéristiques de service auxquelles l'utilisateur a droit.

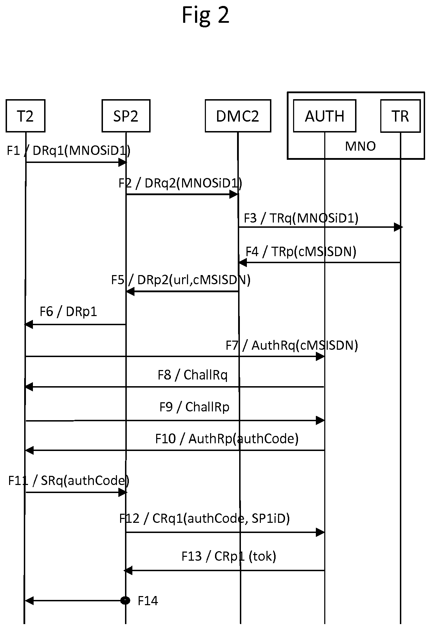

La **figure 2** présente un exemple de mise en oeuvre du procédé d'accès à un service fourni sur un terminal mobile, selon un premier mode de réalisation de l'invention.

La livraison du service est conditionnée à une authentification de l'utilisateur effectuée à l'aide du terminal, selon une méthode différente de la méthode selon la technique antérieure présentée en référence à la figure 1. Les étapes suivantes décrivent cette nouvelle méthode, qui au contraire de la méthode antérieure n'exige pas de l'utilisateur qu'il entre sur le terminal un numéro pour identifier le terminal, que ce soit le numéro MSISDN ou tout autre numéro.

Les étapes F1 à F6 font partie d'une phase de découverte permettant d'obtenir un identifiant pour la phase d'authentification, et les étapes F7 à F10 font partie de la phase d'authentification. La phase d'authentification permet d'obtenir un code pour la phase d'accès au service, et les étapes F11 à F14 font partie de la phase d'accès au service.

Lors d'une étape F1, le terminal T2 émet vers le serveur SP2 une requête DRq1 dite de requête de découverte, destinée à déclencher dans le serveur SP2 le recours à la méthode d'authentification proposée, pour authentifier l'utilisateur. Contrairement à la technique antérieure, la requête DRq1 comprend un identifiant MNOSiD1, dit identifiant de souscripteur, fourni par la carte SIM du terminal T2, ou basé sur une information fournie par la carte SIM. L'identifiant MNOSiD1 permet à un opérateur d'identifier de manière unique le souscripteur d'un abonnement, comme le numéro MSISDN, mais n'est pas le numéro MSISDN.

Cet identifiant de souscripteur MNOSiD1 est, par exemple, le numéro IMSI mémorisé dans la carte SIM du terminal T2, qui est composé d'une partie MCC (Mobile Country Code) permettant d'identifier le pays d'enregistrement de l'opérateur, d'une partie MNC (Mobile Network Code) permettant d'identifier l'opérateur lui-même, et d'une partie MSIN (Mobile Subscriber Identification Number), attribuée par l'opérateur et différente du numéro MSISDN, lui permettant d'identifier l'utilisateur en tant que souscripteur d'un abonnement. Comme il est mémorisé dans la carte SIM, il est possible au terminal T2 d'insérer le numéro IMSI dans la requête DRq1 dans faire intervenir l'utilisateur. L'étape F1 comprend donc une sous-étape d'extraction du numéro IMSI de la carte SIM, et une sous-étape d'insertion du numéro IMSI dans la requête DRq1. Des API (Application Programing Interface) connues permettent à une application exécutée sur un téléphone mobile de récupérer certaines des informations mémorisée dans une carte SIM, telles que le numéro IMSI.

Plus généralement, cet identifiant de souscripteur peut être n'importe quel numéro permettant d'identifier un utilisateur, ou à la fois l'utilisateur et son opérateur mobile, sans qu'il soit possible pour une entité autre que cet opérateur d'en déduire le numéro MSISDN. L'identifiant de souscripteur peut être mémorisé dans la carte SIM, ou généré pour l'étape F1 sur la base d'une information fournie par la carte SIM, comme par exemple le numéro TMSI généré sur la base du numéro IMSI.

Lors d'une étape F2, le serveur SP2 émet vers un serveur dit serveur de découverte DMC2 une requête DRq2, aussi dite requête de découverte, destinée à déclencher dans le serveur DMC2 l'activation de la méthode d'authentification proposée. La requête DRq2 comprend également l'identifiant de souscripteur MNOSiD1 inséré par le terminal T2 sans l'intervention de l'utilisateur.

Lors d'une étape F3, le serveur DMC2 émet une requête TRq, dite requête de traduction, vers une fonction de traduction TR apte à fournir, sur la base d'un identifiant de souscripteur, une version chiffrée du numéro MSISDN. Plutôt qu'une version chiffrée du numéro MSISDN, ce peut être alternativement n'importe numéro ou code, chiffré ou non, qui permette à l'opérateur mobile le recevant de retrouver le numéro MSISDN dont il a besoin pour émettre lors de l'étape F7 une requête de défi vers le terminal T2, et qui cache le numéro MSISDN à toute autre entité que l'opérateur mobile. La requête TRq comprend l'identifiant MNOSiD1, et la fonction est hébergée dans un équipement contrôlé par l'opérateur, tel que par exemple le serveur d'authentification AUTH de l'opérateur mobile. Le serveur de découverte DMC2 obtient l'adresse de cet équipement et/ou de cette fonction de traduction TR soit grâce à une table de correspondance entre numéros MCC/MNC (compris par exemple dans l'identifiant MNOSiD1) et adresses de fonctions de traduction d'opérateurs mobile, soit en interrogeant un serveur spécial. La fonction de traduction TR et le serveur d'authentification AUTH peuvent aussi ne faire qu'un seul serveur.

Alternativement, la requête TRq peut comprendre un identifiant du souscripteur sans les numéros MCC/MNC, qui ne sont pas nécessaires à la fonction de traduction découverte par le serveur de découverte DMC2 justement à l'aide de ces numéros.

Lors d'une étape F4, la fonction TR émet une réponse TRp, dite réponse de traduction, vers le serveur DMC. Cette réponse comprend un paramètre cMSISDN, qui est une version, chiffrée par l'opérateur mobile, du numéro MSISDN, afin que le numéro MSISDN ne soit révélé ni au fournisseur de service gérant le serveur applicatif SP2, ni à l'entité gérant le serveur de découverte DMC, ni à toute entité autre que l'opérateur mobile. Ceci est un avantage supplémentaire de la méthode proposée par rapport à la technique antérieure, où l'entité gérant le serveur de découverte DMC2, c'est-à-dire l'entité gérant la plateforme Mobile Connect, peut avoir connaissance du numéro MSISDN de n'importe quel terminal d'utilisateur.

Au travers d'accords préalables entre l'entité gérant le serveur de découverte DMC2 et des opérateurs mobiles, le serveur DMC2 est apte à faire le lien entre un numéro MCC/MNC et un de ces opérateurs mobiles. Par exemple soit le serveur DMC2 possède en mémoire une table de correspondance entre numéros MCC/MNC et adresses de serveurs d'authentification d'opérateurs mobile, soit il interroge un serveur spécial. La table de correspondance peut être la même que celle mentionnée en rapport avec l'étape F3, si la fonction de traduction et le serveur d'authentification ne font qu'un.

Lors d'une étape F5, le serveur de découverte DMC2 émet vers le serveur applicatif SP2 une réponse DRp2, dite réponse de découverte, comprenant une adresse d'un serveur d'authentification propre à l'opérateur mobile identifié par le numéro MCC/MNC, par exemple une adresse url, ainsi que le paramètre cMSISDN reçu dans la réponse TRp de l'étape F4.

Lors d'une étape F6, le serveur de découverte DMC2 transmet vers le terminal T2, la réponse DRp1, qui comprend le même contenu que la réponse DRp2.

Les messages DRq1, DRq2, DRp2 et DRp1 peuvent faire partie de la même session applicative, par exemple une session http, ou faire partie d'une même chaine de requêtes/réponses http, mémorisée par le serveur SP2.

Les étapes F7 à F14 sont identiques respectivement aux étapes E7 à E14 décrites en relation avec la figure 1 et ne seront pas décrites une nouvelle fois.

Dans une variante de ce premier mode de réalisation, non illustrée, les étapes F3 et F4 sont supprimées, ainsi que le serveur de traduction TR.

Lors d'une étape F1' remplaçant l'étape F1, le terminal T2 émet vers le serveur SP2, une requête DRq1' comprenant non pas l'identifiant de souscripteur MNOSiD1, mais uniquement les identifiants MNC/MCC du terminal T2. Ces identifiants identifient de façon unique le serveur MNO.

Lors d'une étape F2' remplaçant l'étape F2, le serveur SP2 émet vers le serveur de découverte DMC2 une requête de découverte DRq2', destinée à déclencher dans le serveur DMC2 l'activation de la méthode d'authentification proposée.

Lors d'une étape F5' remplaçant l'étape F5, le serveur DMC2 émet vers le serveur SP2 une réponse de découverte DRp2', comprenant l'adresse du serveur AUTH, mais sans le paramètre cMSISDN. Les identifiants MNC/MCC suffisent au serveur DMC2 pour déterminer l'adresse du bon serveur d'authentification correspondant à l'opérateur MNO.

Lors d'une étape F6' remplaçant l'étape F6, le serveur SP2 émet vers le terminal T2 une réponse de découverte DRp1', avec le même contenu que la réponse DRp1', comprenant l'adresse du serveur AUTH, mais sans le paramètre cMSISDN.

Lors d'une étape F7' remplaçant l'étape F7, le terminal T2 émet vers le serveur AUTH une requête d'authentification AuthRq, comprenant l'identifiant de souscripteur MNOSiD1, à la place du paramètre cMSISDN.

Dans cette variante, il n'est nul besoin d'une fonction de traduction mais le serveur d'authentification AUTH doit être capable de retrouver le numéro MSISDN indispensables aux étapes du défi F8 et F9, sur la base d'un message en provenance du terminal T2 comprenant l'identifiant de souscripteur.

Avantageusement, dans cette variante l'identifiant de souscripteur ne passe pas par le serveur SP2 qui n'est pas un serveur du domaine de l'opérateur mobile MNO, donc pas aussi fiable que le serveur d'authentification.

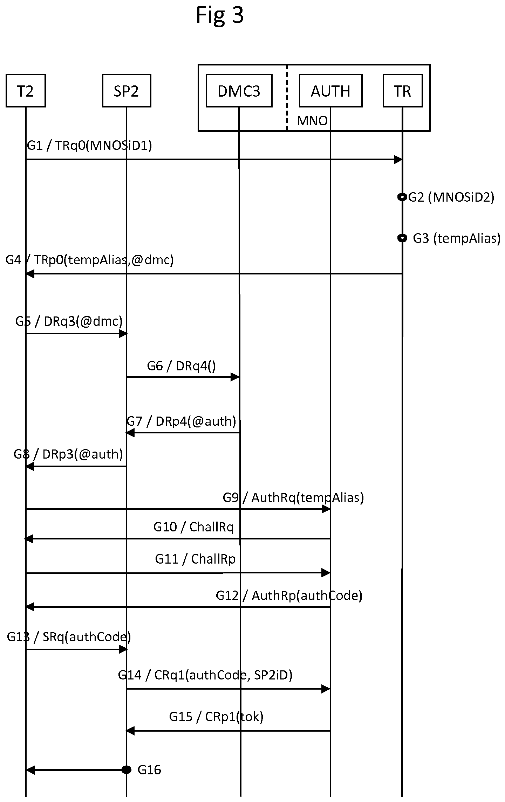

La **figure 3** présente un exemple de mise en oeuvre du procédé d'accès à un service fourni sur un terminal mobile, selon un second mode de réalisation de l'invention.

Avantageusement, dans ce mode, le serveur SP2 n'a accès à aucun identifiant de souscripteur propre à l'opérateur MNO et stocké dans la carte SIM du terminal T2, tel que le numéro IMSI par exemple.

Les étapes G1 à G8 font partie d'une phase de découverte permettant d'obtenir un identifiant pour la phase d'authentification, et les étapes G9 à G12 font partie de la phase d'authentification. La phase d'authentification permet d'obtenir un code pour la phase d'accès au service, et les étapes G13 à G16 font partie de la phase d'accès au service.

Lors d'une étape G1, le terminal T2 émet une requête TRq0, dite requête de traduction, vers une fonction de traduction TR de l'opérateur mobile.

Contrairement à la technique antérieure, la requête TRq0 comprend un identifiant MNOSiD1, dit identifiant de souscripteur, fourni par la carte SIM du terminal T2, ou basé sur une information fournie par la carte SIM. L'identifiant MNOSiD1 permet à un opérateur d'identifier de manière unique le souscripteur d'un abonnement, comme le numéro MSISDN, mais n'est pas le numéro MSISDN.

La fonction de traduction TR est apte à fournir, sur la base de l'identifiant MNOSiD1 associé à l'utilisateur en tant qu'abonné de l'opérateur mobile, par exemple un numéro IMSI (International Mobile Subscriber Identity), TMSI (Temporary Mobile Subscriber Identifier) ou ICCID (Integrated Circuit Card Identifier), un code d'identification tempAlias qui permet à l'opérateur mobile le recevant ultérieurement de retrouver un identifiant MNOSiD2 dont il a besoin pour émettre lors de l'étape G10 une requête de défi vers le terminal T2, par exemple le numéro MSISDN. Ce code d'identification tempAlias cache le numéro MSISDN à toute autre entité que l'opérateur mobile. La requête TRq0 comprend l'identifiant MNOSiD1, et la fonction TR est hébergée dans un équipement contrôlé par l'opérateur, tel que par exemple le serveur d'authentification AUTH de l'opérateur mobile. La fonction de traduction TR et le serveur d'authentification AUTH peuvent aussi ne faire qu'un seul serveur.

L'adresse de cette fonction de traduction TR peut être fournie au terminal T2 de plusieurs façons. Selon une première façon, l'adresse est provisionnée à l'avance dans le terminal T2, par le fournisseur du système d'exploitation installé sur le terminal T2, ou dans la carte SIM par l'opérateur mobile MNO. Selon une deuxième façon, les étapes G5 à G8 décrites ci-dessous peuvent avoir été effectuées avant l'étape G1 et leur résultat peut avoir été mis en mémoire par le terminal T2. Ce résultat inclut l'adresse du serveur d'authentification AUTH mais peut aussi inclure l'adresse de la fonction de traduction TR si elle est différente.

Lors d'une étape G2, la fonction de traduction TR récupère un autre identifiant MNOSiD2 du souscripteur, par exemple le numéro MSISDN du terminal T2, à partir de l'identifiant MNOSiD1.

Lors d'une étape G3, la fonction de traduction TR génère le code d'identification tempAlias associé à l'identifiant MNOSiD2. Ce code d'identification est à usage unique, destiné à être consommé par le serveur d'authentification AUTH lors d'une étape ultérieure G9. Ce code d'identification peut être à durée de vie limitée, par exemple 5 minutes, c'est-à-dire que la récupération de l'identifiant MNOSiD2, par exemple le numéro MSISDN, à partir du code d'identification tempAlias, par le serveur d'authentification AUTH, n'est plus possible après expiration des 5 minutes.

Lors d'une étape G4, la fonction TR émet une réponse TRp0, dite réponse de traduction, vers le terminal T2. Cette réponse comprend le code d'identification tempAlias ainsi qu'une adresse @dmc d'un serveur de découverte DMC3 qui peut être un serveur du domaine de l'opérateur mobile MNO, ou hors de son domaine.

Les requêtes et réponses G1 à G4 peuvent utiliser le protocole https, par exemple.

Lors d'une étape G5, le terminal T2 émet vers le serveur SP2 une requête DRq3 dite requête de découverte, destinée à découvrir un serveur d'authentification associé à l'opérateur mobile MNO. La requête DRq3 comprend l'adresse @dmc du serveur de découverte DMC3 de l'opérateur mobile, que le terminal T2 a obtenue lors de l'étape G4.

Lors d'une étape G6, le serveur SP2 émet, à l'aide de l'adresse @dmc, une requête DRq4 vers le serveur de découverte DMC3 de l'opérateur mobile, dont le but est d'obtenir en réponse une adresse @auth d'un serveur d'authentification AUTH de l'opérateur mobile.

Lors d'une étape G7, le serveur de découverte DMC3 émet vers le serveur SP2 une réponse DRp4 comprenant l'adresse @auth du serveur d'authentification AUTH, obtenue par le serveur de découverte DMC3.

Lors d'une étape G8, le serveur SP2 transmet la réponse DRp2 vers le terminal T2.

L'adresse @auth peut être une adresse d'une liste d'adresses comprise dans la réponse DRp2, qui ont chacune un libellé correspondant à un usage déterminé. Le terminal T2 peut sélectionner dans cette liste une adresse particulière en fonction du type de service qu'il attend du serveur SP2.

Les étapes G6 et G7 permettent au serveur SP2 d'obtenir l'adresse @auth. Les étapes G5 et G8 permettent au terminal T2 d'obtenir l'adresse @auth. Dans une variante, l'adresse @auth étant une adresse stable, l'un ou l'autre de ces deux groupes d'étapes peuvent être exécutés préalablement à l'étape G1, et leur résultat (l'adresse @auth) mémorisé par le terminal T2 et/ou le serveur SP2.

Lors d'une étape G9, où la phase d'authentification débute, à l'aide de l'adresse @auth obtenue lors de l'étape G8, le terminal T2 émet, vers le serveur d'authentification AUTH de l'opérateur mobile gérant l'abonnement du terminal T2, une requête AuthRq, dite requête d'authentification, comprenant le code d'identification tempAlias généré par la fonction TR lors de l'étape G3 à partir de l'identifiant de souscripteur MNOSiD2. Comme le serveur AUTH et la fonction TR font partie du domaine de l'opérateur MNO, le serveur AUTH possède le moyen de récupérer l'identifiant de souscripteur MNOSiD2 en fonction du code d'identification tempAlias, à condition que celui-ci ne soit pas déjà expiré. Le serveur AUTH marque alors le code d'identification tempAlias comme expiré. Le code d'authentification tempAlias peut être déjà expiré pour deux raisons: soit il a déjà été utilisé aux mêmes fins par le serveur d'authentification, et sa présentation une nouvelle fois est alors symptomatique d'une tentative de fraude, soit sa durée de vie est atteinte, par exemple en raison de conditions de transport difficiles ou d'équipement intermédiaire en état de surcharge.

Lors de l'étape G10, avec le code d'identification tempAlias, le serveur AUTH récupère l'identifiant MNOSiD2 et l'utilise afin d'émettre le défi ChallRq par le biais d'un message de type SMS si par exemple l'identifiant MNOSiD2 est le numéro MSISDN du terminal T2, ou par le biais d'une notification utilisant une infrastructure propre au fournisseur du système d'exploitation du terminal T2, par exemple GCM sur Android ou APNS sur iOS.

Les étapes G11 à G16 ne diffèrent pas des étapes E9 à E14 décrites en relation avec la figure 1.

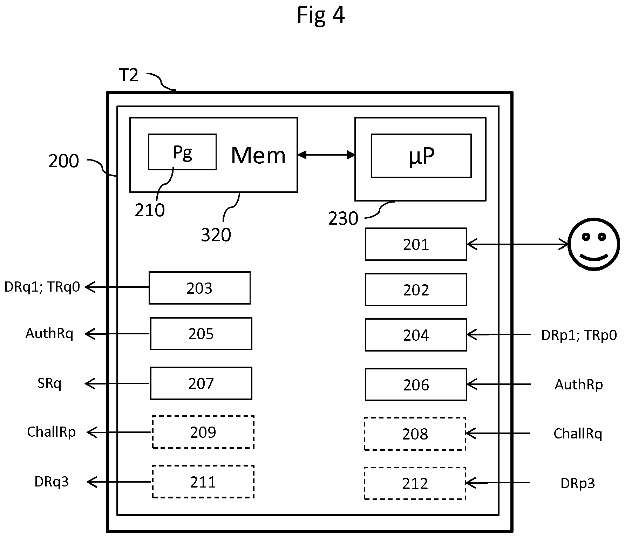

En relation avec la **figure 4****,** on présente maintenant un exemple de structure du dispositif d'accès à un service fourni sur un terminal mobile, selon des aspects de l'invention.

Le dispositif 200 d'accès à un service met en oeuvre le procédé d'accès à un service, dont différents modes de réalisation viennent d'être décrits.

Un tel dispositif 200 peut être mis en oeuvre dans un terminal mobile T2, sur lequel le service est destiné à être consommé.

Par exemple, le dispositif 200 comprend une unité de traitement 230, équipée par exemple d'un microprocesseur µP, et pilotée par un programme d'ordinateur 210, stocké dans une mémoire 220 et mettant en oeuvre le procédé d'accès selon l'invention. A l'initialisation, les instructions de code du programme d'ordinateur 210 sont par exemple chargées dans une mémoire RAM, avant d'être exécutées par le processeur de l'unité de traitement 230.

Le dispositif 200 comprend également :
- une interface multimédia 201 configurée pour la consommation du service par un utilisateur sur le terminal mobile,
- un module de sécurité 202,
- un émetteur 203 apte à et configuré pour émettre une requête DRq1 ou TRq0 comprenant un identifiant d'un souscripteur d'un abonnement auprès d'un opérateur mobile MNO, dit identifiant du souscripteur MNOSiD1, l'identifiant du souscripteur étant compris dans la requête DRq1 ou TRq0) et basé sur une information fournie par le module de sécurité 203 sans intervention de l'utilisateur;
- un récepteur 204 apte à et configuré pour recevoir une réponse DRp1 ou TRp0 comprenant une information relative à l'identifiant du souscripteur MNOSiD1, dite code d'identification cMSISDN ou code d'identification tempAlias;
- un émetteur 205 apte à et configuré pour émettre une requête d'authentification AuthRq comprenant le code d'identification cMSISDN ou le code d'identification tempAlias, vers un serveur d'authentification AUTH de l'opérateur mobile MNO;
- un récepteur 206 apte à et configuré pour recevoir une réponse d'authentification AuthRp comprenant une information relative au code d'identification cMSISDN ou au code d'identification tempAlias, dite code d'authentification authCode;
- un émetteur 207 apte à et configuré pour émettre une requête d'accès au service SRq comprenant le code d'authentification authCode, vers un serveur applicatif SP2 contribuant à fournir le service destiné à être consommé à l'aide de l'interface multimédia 201.

Avantageusement, le dispositif 200 comprend également:
- un récepteur 208 apte à et configuré pour recevoir une requête de défi d'authentification ChallRq en provenance du serveur d'authentification AUTH, requérant une action de la part de l'utilisateur du terminal mobile sur le terminal;
- un émetteur 209 apte à et configuré pour émettre une réponse de défi d'authentification ChalIRp vers le serveur d'authentification AUTH, suite à l'action effectuée sur le terminal par l'utilisateur;
- un émetteur 211 apte à et configuré pour émettre une requête DRq3 de découverte vers le serveur applicatif SP2;
- un récepteur 212 apte à et configuré pour recevoir une réponse DRp3 en provenance du serveur applicatif SP2, comprenant au moins une adresse @auth du second serveur AUTH.

Les émetteurs 203, 205, 207, 209 et 211 peuvent être regroupés en un ou plusieurs émetteurs. De même, les récepteurs 204, 206, 208 et 212 peuvent être regroupés en un ou plusieurs récepteurs.

Les entités décrites en relation avec la figure 4 peuvent être matériels ou logiciels. La figure 4 illustre seulement des manières particulières, parmi plusieurs possibles, de réaliser l'algorithme détaillé ci-dessus, en relation avec les figures 2 et 3. En effet, la technique de l'invention se réalise indifféremment sur des machines de calcul reprogrammables (un ordinateur PC, un processeur DSP ou un microcontrôleur) exécutant un programme comprenant une séquence d'instructions, ou sur des machines de calcul dédiées (par exemple un ensemble de portes logiques comme un FPGA ou un ASIC, ou tout autre module matériel).

Dans le cas où l'invention est implantée sur des machines de calcul reprogrammables, les programmes correspondants (c'est-à-dire les séquences d'instructions) pourront être stockés dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. **Procédé** d'accès à un service fourni sur un terminal mobile (T2) par un serveur contribuant à fournir le service, dit serveur applicatif (SP2), le procédé étant mis en oeuvre par le terminal mobile et comprenant les étapes suivantes:
• émission (G1) d'une requête (TRq0) comprenant un identifiant d'un souscripteur d'un abonnement auprès d'un opérateur mobile (MNO), dit identifiant du souscripteur (MNOSiD1), l'identifiant du souscripteur étant basé sur une information fournie par un module de sécurité du terminal mobile, et inséré dans la requête (TRq0) sans intervention de l'utilisateur; la requête étant émise vers une fonction de traduction (TR) de l'opérateur mobile;
• réception (G4) d'une réponse (TRp0) en provenance de la fonction de traduction (TR) de l'opérateur mobile comprenant une information relative à l'identifiant du souscripteur (MNOSiD1), dite code d'identification (tempAlias), et une adresse d'un serveur de découverte (@dmc);
• émission (G5) d'une requête (DRq3) de découverte vers le serveur applicatif (SP2), comprenant l'adresse du serveur de découverte (@dmc);
• réception (G8) d'une réponse (DRp3) en provenance du serveur applicatif (SP2), comprenant une adresse (@auth) d'un serveur d'authentification (AUTH) de l'opérateur mobile (MNO);
• émission (G9) d'une requête d'authentification (AuthRq) comprenant le code d'identification (tempAlias), la requête d'authentification (AuthRq) étant émise vers le serveur d'authentification (AUTH);
• réception (G12) d'une réponse d'authentification (AuthRp) comprenant une information relative au code d'identification (tempAlias), dite code d'authentification (authCode);
• émission (G13) d'une requête d'accès au service (SRq) comprenant le code d'authentification (authCode), la requête (SRq) étant émise vers le serveur applicatif (SP2).

2. **Procédé** d'accès à un service selon la revendication précédente, comprenant les étapes suivantes, suite à l'émission de la requête (AuthRq) comprenant le code d'identification (tempAlias) vers le serveur d'authentification (AUTH) :
• réception (G10) d'une requête de défi (ChalIRq) d'authentification en provenance du serveur d'authentification (AUTH), requérant une action de la part de l'utilisateur du terminal mobile sur le terminal,
• émission (G11) d'une réponse de défi d'authentification vers le serveur d'authentification (AUTH), suite à l'action effectuée sur le terminal par l'utilisateur.

3. **Procédé** d'accès à un service selon l'une des revendications précédentes, où le code d'identification (tempAlias) est un identifiant généré sur la base d'un numéro de téléphone de type MSISDN associé au module de sécurité du terminal mobile, le numéro de téléphone étant dérivé sur la base de l'identifiant de souscripteur (MNOSiD1).

4. **Procédé** d'accès à un service selon l'une des revendications précédentes, où le code d'identification (tempAlias) est à usage unique.

5. **Procédé** d'accès à un service selon l'une des revendications précédentes, où la validité du code d'identification (tempAlias) est d'une durée limitée.

6. **Dispositif** (200) d'accès à un service sur un terminal (T2) mobile, compris dans le terminal mobile (T2) et comprenant:
• une interface multimédia (201) pour la consommation du service par un utilisateur sur le terminal mobile,
• un module de sécurité (202),
• un émetteur (203) apte à émettre une requête (TRq0) comprenant un identifiant d'un souscripteur d'un abonnement auprès d'un opérateur mobile (MNO), dit identifiant du souscripteur (MNOSiD1), l'identifiant du souscripteur étant compris dans la requête (TRq0) et basé sur une information fournie par le module de sécurité (203) sans intervention de l'utilisateur; la requête étant émise vers une fonction de traduction (TR) de l'opérateur mobile;
• un récepteur (204) apte à recevoir une réponse (TRp0) en provenance de la fonction de traduction (TR) de l'opérateur mobile comprenant une information relative à l'identifiant du souscripteur (MNOSiD1), dite code d'identification (tempAlias), et une adresse d'un serveur de découverte (@dmc);
• un émetteur apte à émettre une requête (DRq3) de découverte vers un serveur applicatif (SP2), comprenant l'adresse du serveur de découverte (@dmc);
• un récepteur apte à recevoir une réponse (DRp3) en provenance du serveur applicatif (SP2), comprenant une adresse (@auth) d'un serveur d'authentification (AUTH) de l'opérateur mobile (MNO);
• un émetteur (205) apte à émettre une requête d'authentification (AuthRq) comprenant le code d'identification (tempAlias), vers un serveur d'authentification (AUTH) de l'opérateur mobile (MNO);
• un récepteur (206) apte à recevoir une réponse d'authentification (AuthRp) comprenant une information relative au code d'identification (tempAlias), dite code d'authentification (authCode);
• un émetteur (207) apte à émettre une requête d'accès au service (SRq) comprenant le code d'authentification (authCode), vers un serveur applicatif (SP2) contribuant à fournir le service destiné à être consommé à l'aide de l'interface multimédia (201).

7. **Système** comprenant un terminal mobile (T2) équipé d'un dispositif d'accès à un service conforme à la revendication 6, un serveur applicatif (SP2) apte à fournir un service destiné à être consommé par un utilisateur sur le terminal mobile (T2), un serveur d'authentification (AUTH) d'un opérateur mobile (MNO) apte à soumettre un défi d'authentification (ChalIRq, ChalIRp) au terminal mobile (T2) sur la base d'une requête (AuthRq) reçue de la part du terminal mobile (T2), et un serveur de découverte (DMC3) apte à fournir une adresse du serveur d'authentification (AUTH) sur la base d'une requête du terminal mobile (DRq3) transmise (DRq4) par le serveur applicatif (SP2).

8. **Programme d'ordinateur,** comprenant des instructions pour la mise en oeuvre des étapes du procédé d'accès à un service selon la revendication 1, lorsque ce programme est exécuté par un processeur d'un terminal mobile (T2).

9. **Support d'informations** lisible par un terminal mobile (T2), et comportant des instructions d'un programme d'ordinateur conforme à la revendication 8.

## Patentansprüche

1. Verfahren zum Zugreifen auf einen Dienst, der auf einem mobilen Endgerät (T2) durch einen Server bereitgestellt wird, der dazu beiträgt, den Dienst bereitzustellen, Anwendungsserver (SP2) genannt, wobei das Verfahren von dem mobilen Endgerät durchgeführt wird und die folgenden Schritte umfasst:
• Senden (G1) einer Anforderung (TRq0), die eine Kennung eines Teilnehmers eines Abonnements bei einem Mobilfunknetzbetreiber (MNO), Teilnehmerkennung (MNOSiD1) genannt, umfasst, wobei die Teilnehmerkennung auf einer Information basiert, die von einem Sicherheitsmodul des mobilen Endgeräts bereitgestellt wird, und in die Anforderung (TRq0) ohne Mitwirkung des Benutzers eingefügt wird; wobei die Anforderung zu einer Übersetzungsfunktion (TR) des Mobilfunknetzbetreibers gesendet wird;
• Empfangen (G4) einer Antwort (TRp0) von der Übersetzungsfunktion (TR) des Mobilfunknetzbetreibers, die eine Information bezüglich der Teilnehmerkennung (MNOSiD1), Identifizierungscode (tempAlias) genannt, und eine Adresse eines Discovery-Servers (@dmc) umfasst;
• Senden (G5) einer Discovery-Anforderung (DRq3) an den Anwendungsserver (SP2), die die Adresse des Discovery-Servers (@dmc) umfasst;
• Empfangen (G8) einer Antwort (DRp3) von dem Anwendungsserver (SP2), die eine Adresse (@auth) eines Authentifizierungsservers (AUTH) des Mobilfunknetzbetreibers (MNO) umfasst;
• Senden (G9) einer Authentifizierungsanforderung (AuthRq), die den Identifizierungscode (tempAlias) umfasst, wobei die Authentifizierungsanforderung (AuthRq) an den Authentifizierungsserver (AUTH) gesendet wird;
• Empfangen (G12) einer Authentifizierungsantwort (AuthRp), die eine Information bezüglich des Identifizierungscodes (tempAlias), Authentifizierungscode (authCode) genannt, umfasst;
• Senden (G13) einer Anforderung des Zugreifens auf den Dienst (SRq), die den Authentifizierungscode (authCode) umfasst, wobei die Anforderung (SRq) an den Anwendungsserver (SP2) gesendet wird.

2. Verfahren zum Zugreifen auf einen Dienst nach dem vorhergehenden Anspruch, umfassend die folgenden Schritte, nach dem Senden der Anforderung (AuthRq), die den Identifizierungscode (tempAlias) umfasst, an den Authentifizierungsserver (AUTH):
• Empfangen (G10) einer Authentifizierungs-Challenge-Anforderung (ChallRq) von dem Authentifizierungsserver (AUTH), die eine Handlung seitens des Benutzers des mobilen Endgeräts auf dem Endgerät anfordert,
• Senden (G11) einer Authentifizierungs-Challenge-Antwort an den Authentifizierungsserver (AUTH) nach der von dem Benutzer auf dem Endgerät vorgenommenen Handlung.

3. Verfahren zum Zugreifen auf einen Dienst nach einem der vorhergehenden Ansprüche, wobei der Identifizierungscode (tempAlias) eine Kennung ist, die auf der Basis einer Telefonnummer vom Typ MSISDN erzeugt wird, die dem Sicherheitsmodul des mobilen Endgeräts zugeordnet ist, wobei die Telefonnummer auf der Basis der Teilnehmerkennung (MNOSiD1) abgeleitet wird.

4. Verfahren zum Zugreifen auf einen Dienst nach einem der vorhergehenden Ansprüche, wobei der Identifizierungscode (tempAlias) zum einmaligen Gebrauch ist.

5. Verfahren zum Zugreifen auf einen Dienst nach einem der vorhergehenden Ansprüche, wobei die Gültigkeit des Identifizierungscodes (tempAlias) von einer begrenzten Dauer ist.

6. Vorrichtung (200) zum Zugreifen auf einen Dienst auf einem mobilen Endgerät (T2), die in dem mobilen Endgerät (T2) enthalten ist und umfasst:
• eine Multimedia-Schnittstelle (201) für die Nutzung des Dienstes durch einen Benutzer auf dem mobilen Endgerät,
• ein Sicherheitsmodul (202),
• einen Sender (203), der geeignet ist, eine Anforderung (TRq0) zu senden, die eine Kennung eines Teilnehmers eines Abonnements bei einem Mobilfunknetzbetreiber (MNO), Teilnehmerkennung (MNOSiD1) genannt, umfasst, wobei die Teilnehmerkennung in der Anforderung (TRq0) enthalten ist und auf einer Information basiert, die von dem Sicherheitsmodul (203) ohne Mitwirkung des Benutzers bereitgestellt wird; wobei die Anforderung zu einer Übersetzungsfunktion (TR) des Mobilfunknetzbetreibers gesendet wird;
• einen Empfänger (204), der geeignet ist, eine Antwort (TRp0) von der Übersetzungsfunktion (TR) des Mobilfunknetzbetreibers zu empfangen, die eine Information bezüglich der Teilnehmerkennung (MNOSiD1), Identifizierungscode (tempAlias) genannt, und eine Adresse eines Discovery-Servers (@dmc) umfasst;
• einen Sender, der geeignet ist, eine Discovery-Anforderung (DRq3) an einen Anwendungsserver (SP2) zu senden, die die Adresse des Discovery-Servers (@dmc) umfasst;
• einen Empfänger, der geeignet ist, eine Antwort (DRp3) von dem Anwendungsserver (SP2) zu empfangen, die eine Adresse (@auth) eines Authentifizierungsservers (AUTH) des Mobilfunknetzbetreibers (MNO) umfasst;
• einen Sender (205), der geeignet ist, eine Authentifizierungsanforderung (AuthRq), die den Identifizierungscode (tempAlias) umfasst, an einen Authentifizierungsserver (AUTH) des Mobilfunknetzbetreibers (MNO) zu senden;
• einen Empfänger (206), der geeignet ist, eine Authentifizierungsantwort (AuthRp) zu empfangen, die eine Information bezüglich des Identifizierungscodes (tempAlias), Authentifizierungscode (authCode) genannt, umfasst;
• einen Sender (207), der geeignet ist, eine Anforderung des Zugreifens auf den Dienst (SRq), die den Authentifizierungscode (authCode) umfasst, an einen Anwendungsserver (SP2) zu senden, der dazu beiträgt, den Dienst bereitzustellen, der dazu bestimmt ist, mithilfe der Multimedia-Schnittstelle (201) genutzt zu werden.

7. System, umfassend ein mobiles Endgerät (T2), das mit einer Vorrichtung zum Zugreifen auf einen Dienst nach Anspruch 6 ausgestattet ist, einen Anwendungsserver (SP2), der geeignet ist, eine Dienst bereitzustellen, der dazu bestimmt ist, von einem Benutzer auf dem mobilen Endgerät (T2) genutzt zu werden, einen Authentifizierungsserver (AUTH) eines Mobilfunknetzbetreibers (MNO), der geeignet ist, dem mobilen Endgerät (T2) eine Authentifizierungs-Challenge (ChallRq, ChallRp) auf der Basis einer seitens des mobilen Endgeräts (T2) empfangenen Anforderung (AuthRq) vorzulegen, und einen Discovery-Server (DMC3), der geeignet ist, eine Adresse des Authentifizierungsservers (AUTH) auf der Basis einer Anforderung des mobilen Endgeräts (DRq3), die von dem Anwendungsserver (SP2) übermittelt (DRq4) wird, bereitzustellen.

8. Computerprogramm, das Anweisungen umfasst, die bei der Ausführung dieses Programms durch einen Prozessor eines mobilen Endgeräts (T2) die Schritte des Verfahrens zum Zugreifen auf einen Dienst nach Anspruch 1 ausführen.

9. Datenträger, der von einem mobilen Endgerät (T2) gelesen werden kann und Anweisungen eines Computerprogramms nach Anspruch 8 beinhaltet.

## Claims

1. Method for accessing a service provided on a mobile terminal (T2) by a server contributing to providing the service, referred to as application server (SP2), the method being implemented by the mobile terminal and comprising the following steps:
• transmitting (G1) a request (TRq0) comprising an identifier of a subscriber to a subscription with a mobile operator (MNO), referred to as subscriber identifier (MNOSiD1), the subscriber identifier being based on information provided by a security module of the mobile terminal, and inserted into the request (TRq0) without the involvement of the user; the request being transmitted to a translation function (TR) of the mobile operator;
• receiving (G4) a response (TRp0) from the translation function (TR) of the mobile operator comprising information relating to the subscriber identifier (MNOSiD1), referred to as identification code (tempAlias), and an address of a discovery server (@dmc);
• transmitting (G5) a discovery request (DRq3) to the application server (SP2), comprising the address of the discovery server (@dmc);
• receiving (G8) a response (DRp3) from the application server (SP2), comprising an address (@auth) of an authentication server (AUTH) of the mobile operator (MNO);
• transmitting (G9) an authentication request (AuthRq) comprising the identification code (tempAlias), the authentication request (AuthRq) being transmitted to the authentication server (AUTH);
• receiving (G12) an authentication response (AuthRp) comprising information relating to the identification code (tempAlias), referred to as authentication code (authCode) ;
• transmitting (G13) a request to access the service (SRq) comprising the authentication code (authCode), the request (SRq) being transmitted to the application server (SP2) .

2. Method for accessing a service according to the preceding claim, comprising the following steps, following the transmission of the request (AuthRq) comprising the identification code (tempAlias) to the authentication server (AUTH):
• receiving (G10) an authentication challenge request (ChallRq) from the authentication server (AUTH), requiring an action from the user of the mobile terminal on the terminal,
• transmitting (G11) an authentication challenge response to the authentication server (AUTH), following the action carried out on the terminal by the user.

3. Method for accessing a service according to either of the preceding claims, wherein the identification code (tempAlias) is an identifier generated on the basis of an MSISDN telephone number associated with the security module of the mobile terminal, the telephone number being derived on the basis of the subscriber identifier (MNOSiD1).

4. Method for accessing a service according to one of the preceding claims, wherein the identification code (tempAlias) is a single-use identification code.

5. Method for accessing a service according to one of the preceding claims, wherein the identification code (tempAlias) is valid for a limited duration.

6. Device (200) for accessing a service on a mobile terminal (T2), contained in the mobile terminal (T2) and comprising:
• a multimedia interface (201) for the service to be consumed by a user on the mobile terminal,
• a security module (202),
• a transmitter (203) able to transmit a request (TRq0) comprising an identifier of a subscriber to a subscription with a mobile operator (MNO), referred to as subscriber identifier (MNOSiD1), the subscriber identifier being contained in the request (TRq0) and based on information provided by the security module (203) without the user being involved; the request being transmitted to a translation function (TR) of the mobile operator;
• a receiver (204) able to receive a response (TRp0) from the translation function (TR) of the mobile operator comprising information relating to the subscriber identifier (MNOSiD1), referred to as identification code (tempAlias), and an address of a discovery server (@dmc);
• a transmitter able to transmit a discovery request (DRq3) to an application server (SP2), comprising the address of the discovery server (@dmc);
• a receiver able to receive a response (DRp3) from the application server (SP2), comprising an address (@auth) of an authentication server (AUTH) of the mobile operator (MNO);
• a transmitter (205) able to transmit an authentication request (AuthRq) comprising the identification code (tempAlias) to an authentication server (AUTH) of the mobile operator (MNO);
• a receiver (206) able to receive an authentication response (AuthRp) comprising information relating to the identification code (tempAlias), referred to as authentication code (authCode);
• a transmitter (207) able to transmit a request to access the service (SRq) comprising the authentication code (authCode) to an application server (SP2) contributing to providing the service intended to be consumed using the multimedia interface (201).

7. System comprising a mobile terminal (T2) equipped with a device for accessing a service according to Claim 6, an application server (SP2) able to provide a service intended to be consumed by a user on the mobile terminal (T2), an authentication server (AUTH) of a mobile operator (MNO) able to submit an authentication challenge (ChallRq, ChallRp) to the mobile terminal (T2) on the basis of a request (AuthRq) received from the mobile terminal (T2), and a discovery server (DMC3) able to provide an address of the authentication server (AUTH) on the basis of a request from the mobile terminal (DRq3) transmitted (DRq4) by the application server (SP2).

8. Computer program comprising instructions for implementing the steps of the method for accessing a service according to Claim 1 when this program is executed by a processor of a mobile terminal (T2).

9. Information medium able to be read by a mobile terminal (T2) and containing instructions of a computer program according to Claim 8.
